# EUROPÄISCHE PATENTANMELDUNG

(11) **EP 0 903 653 A2**
(43) Veröffentlichungstag der Anmeldung: **24.03.1999**
(21) Anmeldenummer: 98115341.4
(22) Anmeldetag: 14.08.1998
(51) Int. Cl.: G05B 19/409

(54) **Bedien- und Beobachtungsvorrichtung mit Infrarotsende- und Empfangseinrichtung**

(30) Priorität: 19.09.1997 DE 29716849 U; 30.04.1998 EP 98107998
(71) Anmelder: SIEMENS AKTIENGESELLSCHAFT, 80333 München (DE)
(72) Erfinder: Kröber, Edmund, Dipl.-Ing., 90556 Cadolzburg (DE)

(57) **Zusammenfassung**

Die Bedien- und Beobachtungsvorrichtung (B) für einen technischen Prozeß (P) weist eine Frontseite (F, SC) auf, an der wenigstens eine Anzeige- und/oder Eingabeeinrichtung (A, T, TS) angeordnet ist. Gemäß der Erfindung ist an der Frontseite (F) zusätzlich eine Infrarotsende- und/oder -Empfangseinrichtung (IR) zur Datenübertragung (D1..Dn), insbesondere zur Datenübertragung von Prozeßdaten (DA) des technischen Prozesses (P), angeordnet. Vorteil der Erfindung ist es, daß auf einfache Weise eine Datenübertragung mit einer externen Sende/Empfangseinrichtung (P1..Pn) durchführbar ist, insbesondere ohne das Gehäuse (G) zu öffnen, um an die im Gehäuse liegende Steckverbindungen (K1) der Bedien- und Beobachtungsvorrichtung (B) zu gelangen.

## Beschreibung

Zur industriellen Anwendung von Bedien- und Beobachtungsvorrichtungen, wie insbesondere sogenannten 'Operator Panels' oder sogenannten 'Touch Panels', sind diese in Struktur und Aufbau auf den Einsatz in industrieller Prozeßumgebung abgestimmt. Dabei sind die Bedien- und Beobachtungsvorrichtungen insbesondere als Einbauvorrichtungen derartig in ein Gehäuse abgedichtet einbaubar, daß diese gegen äußere Umwelteinflüsse, wie beispielsweise Spritzwasser, Schmierfette und Stäube geschützt sind. Außerhalb des Gehäuses liegt in der Regel lediglich die gegenüber dem Gehäuse abgedichtete Bedienfront der Bedien- und Beobachtungsvorrichtung. Die Bedienfront weist in der Regel Eingabe- und Anzeigeeinrichtungen auf, welche durch entsprechende Maßnahmen für den Industrieeinsatz ausgelegt sind. Beispielsweise sind Tastatur und Anzeigendisplay durch eine Schutzfolie abgedeckt oder die Bedien- und Beobachtungsvorrichtung weist als Frontseite eine transparente Frontscheibe mit eingebauter Folientastatur auf. Die Geräteelektronik der Bedien- und Beobachtungsvorrichtung, welche insbesondere zumindest zur Ansteuerung der Anzeige- und Eingabeeinrichtung dient, ist gewöhnlich hinter der Frontseite, geschützt im Inneren des Gehäuse liegend angeordnet.

In der Regel weist eine Bedien- und Beobachtungsvorrichtung elektronische Schnittstellen auf, über welche insbesondere eine extern angeordnete elektronische Schaltung bedient und beobachtet wird, beispielsweise um einen externen technischen Prozeß zu steuern. Die elektronischen Schnittstellen und damit auch deren Stecker und Kabelverbindungen der Bedien- und Beobachtungsvorrichtung liegen dabei ebenfalls hinter der Frontseite angeordnet, geschützt im Inneren des Gehäuses, in das die Bedien- und Beobachtungsvorrichtung eingebaut ist. Dies ist einerseits aus Sicherheitsgründen erforderlich und anderseits notwendig, um die Steckverbindungen gegenüber der Prozeßumgebung, wie beispielsweise Spritzwasser, Stäuben und/oder Schmierfetten zu schützen.

Eine derartige Bedien- und Beobachtungsvorrichtungen ist beispielsweise im Siemens-Katalog 'Das SIMATIC HMI-Programm, Bedienen und Beobachten für jeden Anspruch', Stand 01.10.96, auf den dortigen Seiten 3/34 bis 3/35 beschrieben.

Nachteilig ist es, daß insbesondere an die elektronischen Schnittstellen der Bedien- und Beobachtungsvorrichtung angeschlossene Stecker und Kabelverbindungen für deren Bediener nicht frei von der Frontseite her zugänglich sind, sondern im Innern des Gehäuses liegen, in welches das Bedien- und Beobachtungsgerät eingebaut ist. Es ist aber insbesondere in nicht vernetzten Anlagenbereichen häufig erforderlich, neben der normalen Prozeßkommunikation zeitweilig eine zusätzliche, insbesondere Datenübertragung mit externen Sende/Empfangseinrichtungen zu ermöglichen. Dies ist beispielsweise erforderlich, um eine Datenarchivierung zur Sicherung von relevanten Prozeßdaten, eine Prozeßdiagnose zur Fehlersuche bei Prozeßstörungen oder eine Aktualisierung/Fehlerbehebung von Software der Bedien- und Beobachtungsvorrichtung durchführen zu können.

Um eine derartige Datenübertragung zwischen der Bedien- und Beobachtungsvorrichtung und einer externen Sende- und Empfangseinrichtung herzustellen, ist bisher das Gehäuse, beispielsweise ein Schaltpult oder -Schrank, in welches die Bedien- und Beobachtungsvorrichtung eingebaut ist, öffenbar konstruiert. Dadurch kann das Gehäuse aufgeklappt werden, so daß die Stecker der Bedien- und Beobachtungsvorrichtung für den Bediener zum Anschließen von Kabelverbindungen zugänglich werden.

Nachteilig ist es dabei, daß einerseits das Gehäuse in welches die Bedien- und Beobachtungsvorrichtung eingebaut ist aufklappbar gestaltet sein muß, und andererseits während einer Datenübertragung mit einer externen Sende- und Empfangseinrichtung das Gehäuse geöffnet bleiben muß, wodurch dessen Schutz gegenüber Umwelteinflüssen und möglicherweise sogar der Betrieb der Bedien- und Beobachtungsvorrichtung erheblich beeinträchtigt wird. Des weiteren ist es nachteilig, daß die Vorbereitungen für eine Datenübertragung zwischen der Bedien- und Beobachtungsvorrichtung und einer externen Sende- und Empfangseinrichtung umständlich und zeitaufwendig sind, da es erforderlich ist, erst das Gehäuse zu öffnen und beispielsweise Datenkabel auf die Steckerelemente der Bedien- und Beobachtungsvorrichtung zu stecken.

Aufgabe der Erfindung ist es somit, eine Bedien- und Beobachtungsvorrichtung anzugeben, welche es auf eine einfachere Weise ermöglicht, eine Datenübertragung mit einer externen Sende/Empfangseinrichtung durchzuführen.

Vorteil der Erfindung ist es, daß an der Frontseite der Bedien- und Beobachtungsvorrichtung zusätzlich eine Infrarotsende- und/oder -Empfangseinrichtung zur Datenübertragung angeordnet ist. Die Datenübertragung erfolgt bevorzugt mit wenigstens einer externen Sende- und/oder Empfangseinrichtung. Vorteilhaft kann auch während des normalen Betriebs der Bedien- und Beobachtungsvorrichtung eine Datenübertragung über die Infrarotsende- und/oder -Empfangseinrichtung stattfinden. Dadurch kann die Bedien- und Beobachtungsvorrichtung fest und abgedichtet im Gehäuse eingebaut verbleiben, bzw. das Gehäuse braucht zur Datenübertragung nicht geöffnet werden. Eine Datenübertragung kann somit ohne Eingriff in den bestehenden Anlagenaufbau und ohne Beeinträchtigung des normalen Betriebs erfolgen.

In einer vorteilhaften Ausführungsform der Erfindung weist die Infrarotsende- und/oder -Empfangseinrichtung einen gebündelten Abstrahlwinkel auf, wodurch eine hohe, fehlerarme Datenübertragungsrate ermöglicht wird, und die Abhörsicherheit erhöht wird.

Vorteilhaft ist an der Frontseite der Bedien- und Beobachtungsvorrichtung gemäß einer weiteren vorteilhaften Ausbildung der Erfindung eine licht- und infrarotlichtdurchlässige Schutzfolie, insbesondere eine Schutzplatte, zur Abdeckung von Anzeige- und/oder Eingabeeinrichtung und der Infrarotsende- und/oder -Empfangseinrichtung angeordnet.

Weitere vorteilhafte Ausführungsformen der Erfindung sind in den entsprechenden Unteransprüchen angegeben.

Die Erfindung wird des weiteren anhand der in den nachfolgend kurz angeführten Figuren dargestellten Ausführungsbeispiele weiter erläutert. Dabei zeigt:
- FIG 1: beispielhaft eine Draufsicht auf eine erfindungsgemäß gestaltete, beispielhafte Bedien- und Beobachtungsvorrichtung, wobei über die Infrarotsende- und/oder - Empfangseinrichtung eine Datenübertragung mit externen Sende- und Empfangseinrichtungen erfolgt,
- FIG 2: beispielhaft eine seitliche Schnittdarstellung einer erfindungsgemäße gestalteten, beispielhaften Bedien- und Beobachtungsvorrichtung im eingebauten Zustand mit elektronischer Schnittstelle zur Ansteuerung der Infrarotsende- und/oder Infraroteempfangseinrichtung.

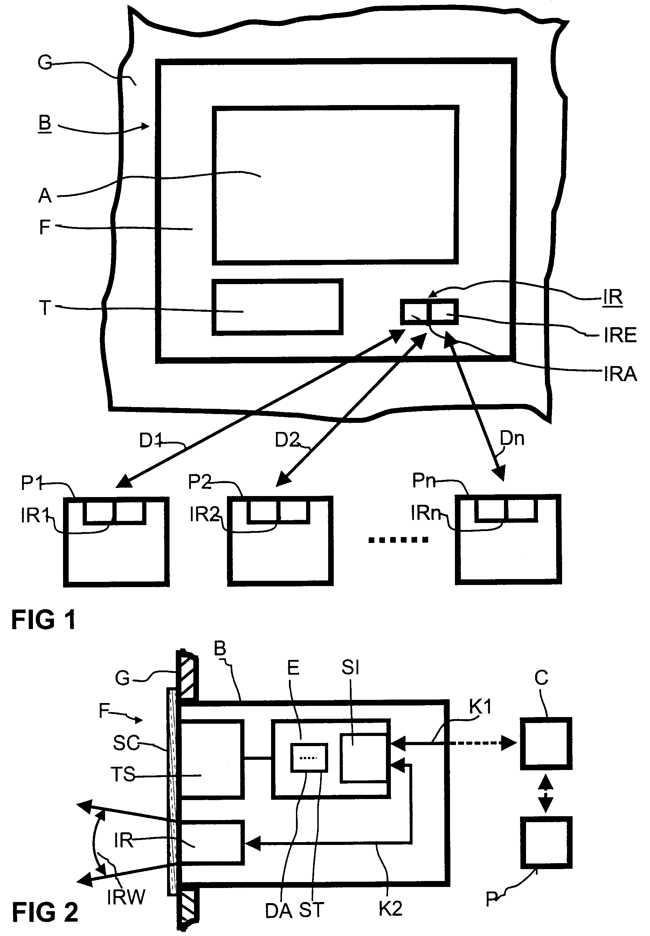

In der Figur 1 ist beispielhaft eine Frontansicht einer erfindungsgemäßen Bedien- und Beobachtungsvorrichtung B für einen in der Figur 2 symbolisch dargestellten technischen Prozeß P dargestellt. Bei einem derartigen, häufig industriellen technischen Prozeß werden in vielen Fällen Stoffe erzeugt, bearbeitet und/oder umgeformt. Eine Frontseite der erfindungsgemäßen Bedien- und Beobachtungsvorrichtung B ist folglich gegenüber Umwelteinflüssen geschützt aufgebaut, welche von einem derartigen technischen Prozeß verursacht werden können bzw. in dessen Umgebung auftreten. Diese können Staub- und Spritzwasserbelastungen, Verschmutzungen mit Schmierfetten u.dgl. sein. Es kann sich aber auch um atmosphärische Umwelteinflüsse wie Regen und Eis handeln, welche auf Grund der Lage des technischen Prozesses nicht von der zugehörigen Bedien- und Beobachtungsvorrichtung B ferngehalten werden können.

Die Bedien- und Beobachtungsvorrichtung B ist beispielhaft in einem Gehäuse G eingebaut. Das Gehäuse G ist beispielsweise ein Schaltschrank oder ein Schaltpult. An einer Frontseite F der Bedien- und Beobachtungsvorrichtung B ist wenigstens eine Anzeigeeinrichtung A und/oder eine Eingabeeinrichtung T angeordnet. Eine Anzeigeeinrichtung A ist beispielsweise ein Flüssigkristallbildschirm, eine Eingabeeinrichtung T ist beispielsweise eine Tastatur. Die Funktionen von Anzeigeeinrichtung und Eingabeeinrichtung A bzw. T können aber insbesondere auch in einer berührungsempfindlichen Anzeige-/Eingabe-einrichtung, insbesondere in einem sogenannten 'Touchscreen' zusammengeführt sein.

Erfindungsgemäß ist an der Frontseite F der Bedien- und Beobachtungsvorrichtung B mindestens eine Infrarotsende- und/oder -Empfangseinrichtung IR zur Datenübertragung angeordnet. In der Figur 1 weist die Infrarotsende- und/oder -Empfangseinrichtung IR beispielhaft eine Infrarot-Sendeeinrichtung IRA und eine Infrarot-Empfangseinrichtung IRE auf. Diese sind beispielsweise eine Infrarot-Sende- bzw. eine Infrarot-Empfangsdiode. Die über die Infrarotsende- und/oder -Empfangseinrichtung IR erfolgende Datenübertragung, welche in der Figur 1 beispielhaft mit den Pfeilen D1 bis Dn symbolisiert ist, erfolgt bevorzugt mit wenigstens einer externen Sende- und Empfangseinrichtung P1 bis PN, welche jeweils eigene Infrarotsende- und/oder -Empfangseinrichtungen IR1 bis IRn aufweisen. Die Datenübertragung D1 bis Dn erfolgt bevorzugt seriell und insbesondere bidirektional. Die externe Sende- und Empfangseinrichtung P1 bis PN ist beispielsweise ein tragbarer Computer, ein Notebook, ein Modern oder ein Drucker.

In der Figur 2 ist beispielhaft eine seitliche Schnittdarstellung der erfindungsgemäßen Bedien- und Beobachtungsvorrichtung B im in das Gehäuse G eingebauten Zustand dargestellt. Die Bedienungs- und Beobachtungsvorgänge erfolgen dabei von der Frontseite F aus.

Gemäß der Darstellung in Figur 2 weist die erfindungsgemäße Bedien- und Beobachtungsvorrichtung B eine elektronische Schaltung E zur Ansteuerung der Infrarotsende- und/oder -Empfangseinrichtung IR auf. Diese ist bevorzugt in Form einer eigenständigen Datenverarbeitungseinheit ausgeführt, und vorteilhaft über eine zusätzliche elektronische Schnittstelle SI mit der der Infrarotsende- und/oder -Empfangseinrichtung IR verbunden. Die Ansteuerung der Infrarotsende- und/oder -Empfangseinrichtung IR durch die elektronische Schnittstelle SI ist in der Figur 2 beispielhaft durch den Pfeil K2 dargestellt. Die elektronische Schaltung E dient des weiteren insbesondere zur Ansteuerung der in der Figur 1 dargestellten Anzeige und/oder Eingabeeinrichtung A bzw. T, deren Funktionen in der Figur 2 beispielhaft unter dem Bezugszeichen TS, beispielsweise ein sogenannter 'Touchscreen', zusammengefaßt sind. Die elektronische Schaltung E beispielsweise verarbeitet, bereitet auf oder speichert insbesondere Prozeßdaten DA des technischen Prozesses P, welche erfindungsgemäß über die Infrarotsende- und/oder -Empfangseinrichtung IR übertragen werden können. Die elektronische Schnittstelle SI kann beispielsweise zusätzlich auch als im Gehäuse G angeordnete, kabelgebundene Schnittstelle K1 für eine Prozeßsteuerung C und den technischen Prozeß P dienen.

Erfindungsgemäß steuert die elektronische Schaltung E die zur Anzeige und/oder manuellen Eingabe von Prozeßdaten DA dienenden Einrichtungen abhängig von mindestens einem, auf den jeweiligen technischen Prozeß P abgestimmten Steuer- und/oder Diagnoseprogramm ST an. Ein derartiges Programm stellt für die erfindungsgemäße Bedien- und Beobachtungsvorrichtung quasi einen Teil von dessen Betriebssystem dar. Hiermit werden alle Bedien- und Beobachtungsmittel anwendungsabhängig auf die Gegebenheiten des jeweiligen technischen Prozesses eingestellt. So kann ein derartiges Steuer- und/oder Diagnoseprogramm ST z.B. ein sogenanntes Prozeßabbild enthalten, welches auf einer Anzeigevorrichtung der Bedien- und Beobachtungsvorrichtung ausgegeben wird. In einem solchen Prozeßabbild können aktuelle Werte von Prozeßdaten angezeigt, bzw. der Zustand von Betriebsmittel des technischen Prozesses verändert werden.

Erfindungsgemäß ist die mindesten eine Infrarotsende- und/oder Infrarotempfangseinrichtung IR mit der elektronischen Schaltung E entweder zum Zwecke der Absendung von aktuellen Prozeßdaten DA aus dem jeweiligen technischen Prozesses P an externe Verarbeitungseinheiten und/oder zum Zwecke der Einspeisung von aktuellen Steuer- oder Diagnoseprogrammen ST verbunden. Aus Sicherheitsgründen ist es nicht möglich, die zur Bedienung und Steuerung des zugeordneten technischen Prozesses dienden Einrichtungen der Bedien- und Beobachtungsvorrichtung, wie z.B. eine Tastatur oder ein Touchscreen, über die Infrarotsende- und/oder Infrarotempfangseinrichtung fernzubedienen. Eingaben von Prozeßdaten sollen ausschließlich manuell über die entsprechenden Einrichtungen von Bedienpersonal vorgenommen werden können. Vielmehr sollen gemäß der Erfindung über die 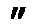 Infrarotsende- bzw. Infrarotempfangseinrichtung" insbesondere von entsprechendem Fachpersonal sogenannte systembedingte Softwareupdates vorgenommen bzw. aktuelle Prozeßdaten abgerufen werden können. Falls z.B. bei einem Umbau eines technischen Prozesses bestimmte Betriebsmittel, wie z.B. Motoren, demontiert, bzw. zusätzliche Betriebsmittel, wie z.B. Pumpen, installiert wurden, so muß auch die dazugehörige Bedien- und Beobachtungsvorrichtung entsprechend angepaßt werden. Mit Hilfe der Erfindung ist dies ohne Eingriff in den gegen Umwelteinflüsse geschützten Aufbau dadurch möglich, daß aktuelle Steuer- oder Diagnoseprogrammen ST über die Infrarotschnittstellen eingelesen werden können. So kann beispielsweise ein neues Prozeßabbild geladen werden, bei dem die durch einen Umbau vorgenommenen Änderungen am technischen Prozeß berücksichtigt sind. Ferner können auch Diagnosezwecken aktuelle Prozeßdaten über die Infrarotschnittstellen ausgelesen und z.B. über ein Modem und Datenübertragungsleitungen bis zu entsprechenden Auswerteeinrichtungen übertragen werden.

In einer weiteren vorteilhaften Ausführungsform der Erfindung weist die Infrarotsende- und/oder -Empfangseinrichtung IR einen gebündelten Abstrahlwinkel IRW auf, welcher insbesondere kleiner gleich 30 Grad ist. Dies ermöglicht auch bei hohen Datenübertragungsraten, beispielsweise größer ein Megabit pro Sekunde, eine fehlerfreie und abhörsichere Datenübertragung. Die Datenübertragung erfolgt beispielsweise mittels eines standardisierten sogenannten 'RZI-Protokolls', welches von der Infrared Data Association für Infrarot-Datenübertragungen festgelegt ist.

In einer weiteren vorteilhaften Ausführungsform der Erfindung weist die Bedien- und Beobachtungsvorrichtung B eine an der Frontseite F angeordnete licht- und infrarotdurchlässige Abdeckfolie SC, insbesondere eine Abdeckplatte, auf. Diese deckt die Anzeige- und/oder Eingabeeinrichtung A bzw. T und die Infrarotsende- und/oder -Empfangseinrichtung IR zum Schutz gegen äußere Umwelteinflüsse ab.

## Patentansprüche

1. Bedien- und Beobachtungsvorrichtung (B) für einen insbesondere industriellen technischen Prozeß (P), mit
a) einer Frontseite (F), welche gegen Umwelteinflüsse in der Umgebung von technischen Prozessen geschützt aufgebaut ist, insbesondere gegen Stäube, Fette und Wasser,
b) wenigstens einer Einrichtung (A,T,TS) zur Anzeige und/oder manuellen Eingabe von Prozeßdaten (DA) des jeweiligen industriellen technischen Prozesses (P), welche an der Frontseite (F) angeordnet ist,
c) einer elektronischen Schaltung (E), insbesondere einer Datenverarbeitungseinheit, welche die Einrichtung (A,T,TS) zur Anzeige und/oder manuellen Eingabe von Prozeßdaten (DA) abhängig von mindestens einem auf den jeweiligen technischen Prozeß (P) abgestimmten Steuer- und/oder Diagnoseprogramm (ST) ansteuert, und
d) mindestens einer Infrarotsende- und/oder Infrarotempfangseinrichtung (IR), die mit der elektronischen Schaltung (E) zur Absendung von aktuellen Prozeßdaten (DA) des jeweiligen technischen Prozesses (P) und/oder zur Einspeisung aktueller Steuer- oder Diagnoseprogramme (ST) verbunden ist.

2. Bedien- und Beobachtungsvorrichtung (B) nach einem der vorangegangenen Ansprüche, **dadurch gekennzeichnet,** daß die Infrarotsende- und/oder -empfangseinrichtung (IR) einen gebündelten Abstrahlwinkel (IRW), insbesondere kleiner gleich 30 Grad, aufweist.

3. Bedien- und Beobachtungsvorrichtung (B) nach einem der vorangegangenen Ansprüche, **gekennzeichnet durch** eine an der Frontseite (F) angeordnete licht- und infrarotlichtdurchlässige Schutzfolie (SC) zur Abdeckung der Anzeige- und/oder Eingabeeinrichtung (A, T, TS) und der Infrarotsende- und/oder -empfangseinrichtung (IR).

4. Bedien- und Beobachtungsvorrichtung (B) nach einem der vorangegangenen Ansprüche, **dadurch gekennzeichnet,** daß die Eingabeeinrichtung (T) eine Tastatur ist.

5. Bedien- und Beobachtungsvorrichtung (B) nach einem der vorangegangenen Ansprüche, **dadurch gekennzeichnet,** daß die Ausgabeeinrichtung (A) eine elektronische Anzeige, insbesondere ein Flüssigkristallbildschirm ist.

6. Bedien- und Beobachtungsvorrichtung (B) nach einem der Ansprüche 1 bis 3, **dadurch gekennzeichnet,** daß die Anzeige- und/oder die Eingabeeinrichtung (A, E) eine berührungsempfindliche Anzeige-/Eingabeeinrichtung (TS) sind, insbesondere ein Touchscreen.
